# EUROPÄISCHE PATENTSCHRIFT

(11) **EP 3 408 548 B1**
(45) Veröffentlichungstag und Bekanntmachung des Hinweises auf die Patenterteilung: **06.11.2019**
(21) Anmeldenummer: 16816276.6
(22) Anmeldetag: 19.12.2016
(51) Int. Cl.: F16C 11/06, F16J 3/04

(54) **KUGELGELENK FÜR EIN FAHRZEUG, INSBESONDERE FÜR EIN OFFROADFAHRZEUG**
BALL JOINT FOR A VEHICLE, IN PARTICULAR FOR AN OFF-ROAD VEHICLE
JOINT À ROTULE POUR UN VÉHICULE, EN PARTICULIER POUR UN VÉHICULE HORS ROUTE

(30) Priorität: 26.01.2016 DE 102016201046
(43) Veröffentlichungstag der Anmeldung: 05.12.2018
(73) Patentinhaber: ZF Friedrichshafen AG, 88046 Friedrichshafen (DE)
(72) Erfinder: BRUNNEKE, Hans-Gerd, 49124 Georgsmarienhütte (DE); KALMEY, Ulrich, 32351 Stemwede (DE); HELMS, Heinfried, 49152 Bad Essen (DE)
(86) Internationale Anmeldenummer: PCT/EP2016/081666
(87) Internationale Veröffentlichungsnummer: WO 2017/129321

(56) Entgegenhaltungen:
- DE-A1-102007 035 654
- DE-A1-102012 014 799
- JP-A- H01 229 120
- US-A- 3 842 621
- US-A- 5 312 300
- US-A1- 2005 051 973

## Beschreibung

Die Erfindung betrifft ein Kugelgelenk für ein Fahrzeug, insbesondere für ein Offroadfahrzeug, gemäß dem Oberbegriff von Patentanspruch 1.

Kugelgelenke für Fahrzeuge, insbesondere für Offroadfahrzeuge, sind aus dem Stand der Technik bekannt. In der DE 10 2007 035 654 A1 ist ein Kugelgelenk für einen land- oder forstwirtschaftlichen Schlepper, einen Unimog oder ein militärisch nutzbares Fahrzeug offenbart, wobei das Kugelgelenk ein Gehäuse und einen in dem Gehäuse dreh- und schwenkbeweglich gelagerten Kugelzapfen aufweist. Der Kugelzapfen erstreckt sich aus einer Öffnung des Gehäuses heraus und weist einen konischen Schaft und eine Gelenkkugel auf, wobei die Gelenkkugel innerhalb des Gehäuses angeordnet ist. Die Gehäuseöffnung ist durch einen Dichtungsbalg gegen ein unerwünschtes Eindringen von Schmutz und/oder Feuchtigkeit geschützt. Der Dichtungsbalg weist ein zapfenseitiges Ende auf, welches dem Kugelzapfen zugeordnet ist und an der konischen Außenumfangsfläche des Schaftes anliegt, und ein gehäuseseitiges Ende, welches an der Außenumfangsfläche des Gehäuses festgelegt ist. Um den Dichtungsbalg gegen eine Beschädigung durch äußere mechanische Einwirkung, beispielsweise durch Steine, Äste oder ähnliche scharfkantige Hindernisse, zu schützen, ist dem Dichtungsbalg ein separater Schutzumhang übergelegt. Der Schutzumhang kann als in sich schlaffes Stahlringgeflecht oder als ein Gewebe aus Stahl- oder Kohlefasern ausgebildet sein. In der Beschreibung ist ausgeführt, dass der Schutzumhang in sich elastisch ausgebildet wäre, jedoch muss das Wort elastisch im Kontext der Schrift im Sinne von flexibel verstanden werden, weil die vorgenannten Materialien eben keine Rückstellungseigenschaften aufweisen, also nach einer Verformung nicht im Wesentlichen in die Ausgangslage zurückkehren.

Der Schutzumhang ist als Schlauchumhüllung ausgebildet und überdeckt den gesamten Umfang des Dichtungsbalgs nach Art eines in sich flexiblen Umhangs. Um den Schutzumhang im montierten Zustand mit der Außenumfangsfläche des Dichtungsbalgs in Kontakt zu bringen, werden äußere Federringe verwendet, zum Beispiel elastische Gummiringe. Die Federringe drücken den in sich nicht formstabilen Schutzumhang, dem Faltenwurf des Dichtungsbalgs folgend, in radial einwärts weisende, taillierte Faltungen des Dichtungsbalgs. Diese andrückende Wirkung der Federringe bzw. Gummiringe lässt allerdings erfahrungsgemäß im Laufe der Zeit nach. Darüber hinaus können die Federringe im Laufe der Zeit reißen und stellen sowohl in Bezug auf deren Einkaufspreis als auch in Bezug auf den Aufwand für deren Montage einen Kostenfaktor dar. Weiterhin können die Federringe im Fahrbetrieb, insbesondere im Offroadfahrbetrieb, beispielsweise durch Äste von dem Schutzumhang abgestreift werden. An dessen zapfenseitigen Ende muss der Schutzumhang mit Hilfe eines Spannrings lagefixiert werden, um nicht durch dessen Eigengewicht von dem Dichtungsbalg herunter zu rutschen. Die Anbindung des Schutzumhangs an den Spannring ist aufwendig, weil die zapfenendseitigen Ringe des Stahlringgeflechts einzeln auf den Spannring aufgezogen werden müssen. Das Stahlringgeflecht und das Gewebe aus Stahl- oder Kohlefasern neigen insbesondere im Offroadfahrbetrieb zu einer unerwünschten Schmutzaufnahme bzw. Schmutzeinlagerung. Das Stahlringgeflecht kann aus einem Cr-Ni-Edelstahl bestehen, wobei sowohl dieser Werkstoff als auch die Herstellung des Stahlringgeflechts relativ teuer sind.

Aufgabe der Erfindung ist es, eine relativ günstige Schutzeinrichtung zum Schutz des Dichtungsbalgs vor Beschädigungen durch mechanische Einwirkung bereitzustellen.

Diese Aufgabe wird gemäß der vorliegenden Erfindung gelöst durch ein gattungsgemäßes Kugelgelenk, welches zusätzlich die kennzeichnenden Merkmale des Patentanspruchs 1 aufweist.

Bevorzugte Ausführungsformen und Weiterbildungen sind Gegenstand der Unteransprüche und der nachfolgenden Beschreibung.

Die Erfindung sieht demnach ein Kugelgelenk für ein Fahrzeug vor, insbesondere für ein Offroadfahrzeug, wobei das Kugelgelenk ein Gehäuse und einen in dem Gehäuse dreh- und schwenkbeweglich gelagerten Kugelzapfen aufweist, welcher sich mit einem Schaft aus einer Öffnung des Gehäuses heraus erstreckt. Die Gehäuseöffnung ist durch einen Dichtungsbalg gegen ein unerwünschtes Eindringen von Schmutz und/oder Feuchtigkeit geschützt. Erfindungsgemäß ist der Dichtungsbalg zur Vermeidung von Beschädigungen desselben durch mechanische Einwirkung bereichsweise von einem Balgschutz umschlossen. Feldversuche haben gezeigt, dass Beschädigungen durch mechanische Einwirkung nicht an sämtlichen Stellen der Außenoberfläche des Dichtungsbalgs mit der gleichen Wahrscheinlichkeit auftreten. Insbesondere in den Bereichen, in denen zwischen dem Dichtungsbalg und dem Kugelzapfen oder zwischen dem Dichtungsbalg und dem Gehäuse ein größerer Abstand vorliegt, ist die Gefahr einer Beschädigung des Dichtungsbalgs während des Fahrbetriebs, insbesondere während des Offroadfahrbetriebs, relativ gering. Dies ist darin begründet, dass beispielsweise Äste oder spitze Steine, die auf den Dichtungsbalg treffen, diesen zwar eindrücken, aber nicht gegen ein festes Bauteil wie den Kugelzapfen oder das Gehäuse drücken.

Das bloße Eindrücken des Dichtungsbalgs führt daher nicht zu einer Beschädigung desselben, wobei unter einer Beschädigung in diesem Zusammenhang eine zumindest partielle Zerstörung des Dichtungsbalgs zu verstehen ist, mit der Folge, dass der Dichtungsbalg eine Undichtigkeit aufweist, durch die für eine Schmierung des Kugelgelenks erforderliches und durch den Dichtungsbalg eingeschlossenes Schmiermittel austreten kann. Darüber hinaus kann durch einen beschädigten Dichtungsbalg Schmutz und/oder Feuchtigkeit in den Bereich eindringen, in dem der Kugelzapfen mit einer Gelenkkugel dreh- und schwenkbeweglich in dem Gehäuse gelagert ist und dadurch die Lagerung kontaminieren, was mit hoher Wahrscheinlichkeit zu einem vorzeitigen Ausfall des Kugelgelenks führt. Der Balgschutz ist in Abhängigkeit von der Beschädigungswahrscheinlichkeit des Dichtungsbalgs ausgelegt und umschließt nur einen Bereich des Dichtungsbalgs, für den ein erhöhtes Beschädigungsrisiko besteht. Auf diese Weise kann der Balgschutz relativ günstig ausgeführt werden.

Durch die Formulierung, dass der Balgschutz den Dichtungsbalg umschließt, soll zum Ausdruck gebracht werden, dass der Balgschutz mit dessen Innenumfangsfläche zumindest im Wesentlichen an einer Außenumfangsfläche des Dichtungsbalgs anliegt. Der Balgschutz weist vorzugsweise eine Mantelfläche auf, die umfänglich geschlossen und im nicht ausgelenkten Zustand des Kugelzapfens zumindest im Wesentlichen rotationssymmetrisch ausgebildet ist. Der Balgschutz weist vorzugsweise axial gegenüberliegende Stirnseiten auf, die jeweils eine Ausnehmung aufweisen, welche insbesondere kreisförmig ausgebildet ist. Mit der Formulierung, dass der Balgschutz den Dichtungsbalg bereichsweise umschließt, ist gemeint, dass der Balgschutz nur einen Teilbereich der Außenumfangsfläche des Dichtungsbalgs umschließt oder, anders ausgedrückt, dass die Innenumfangsfläche des Balgschutzes kleiner ist als die Außenumfangsfläche des Dichtungsbalgs. Vorteilhaft erstreckt sich die Innenumfangsfläche des Balgschutzes im montierten Zustand nicht über die Außenumfangsfläche des Dichtungsbalgs hinaus.

Das Kugelgelenk ist insbesondere für den Einsatz in Offroadfahrzeugen geeignet, bei denen während des Offroadfahrbetriebs die Gefahr besteht, dass der Dichtungsbalg durch äußere mechanische Einwirkung, beispielsweise durch Steine, Äste oder ähnliche scharfkantige Hindernisse, beschädigt wird. Solche Offroadfahrzeuge können mobile Arbeitsmaschinen wie beispielsweise landwirtschaftliche und forstwirtschaftliche Zugmaschinen einschließlich Unimogs, selbstfahrende Erntemaschinen, selbstfahrende Baustellenfahrzeuge wie zum Beispiel Muldenkipper oder Militärfahrzeuge sein. Das Kugelgelenk kann als Axialkugelgelenk, insbesondere Traggelenk, oder als Winkelkugelgelenk, welches auch als Radialkugelgelenk bezeichnet wird, ausgebildet sein. Der Einbauort des Kugelgelenks liegt im Fahrwerksbereich insbesondere an Stellen, die beispielsweise für Äste, Steine oder Baumstümpfe zugänglich sind. Das Kugelgelenk kann beispielsweise Teil einer Einzelradaufhängung oder einer Starrachsanbindung oder eines Lenkgestänges sein und in einen Zweipunktlenker oder einen Dreipunktlenker eingebaut sein, wobei die Lenker zum Beispiel als Spurstange, Lenkstange, Querlenker, Längslenker oder Schräglenker ausgebildet sein können. Bevorzugt liegt der Dichtungsbalg einenends mit einem Schaft-Anlagebereich dichtend an dem Schaft und andernends mit einem Gehäuse-Anlagebereich dichtend an dem Gehäuse an, wobei der Balgschutz den Dichtungsbalg in einem Umschließungsbereich umschließt, der sich, ausgehend von dem Gehäuse-Anlagebereich, in Axialrichtung des Kugelgelenks in Richtung des Schaft-Anlagebereichs erstreckt. Der Dichtungsbalg liegt dabei mit dessen Gehäuse-Anlagebereich an dem Gehäuse an, wobei der Gehäuse-Anlagebereich einen Teilbereich der Innenumfangsfläche des Dichtungsbalgs darstellt. Der Bereich der Außenumfangsfläche des Dichtungsbalgs, der den Gehäuse-Anlagebereich umschließt, bildet eine umlaufende Anlagefläche für den Balgschutz. Der Balgschutz liegt an dieser umlaufenden Anlagefläche mit einem Dichtungsbalg-Anlagebereich an. Der Gehäuse-Anlagebereich und der Dichtungsbalg-Anlagebereich stellen gehäuseseitige Endabschnitte der Innenoberflächen des Dichtungsbalgs bzw. des Balgschutzes dar. Die gehäuseseitigen Enden des Dichtungsbalgs und des Balgschutzes sind in Axialrichtung vorteilhaft bündig angeordnet. Unter der Axialrichtung des Kugelgelenks ist im Sinne der Erfindung die Axialrichtung des nicht ausgelenkten Kugelzapfens zu verstehen. Falls der Kugelzapfen rotationssymmetrisch ausgebildet ist, fällt die Axialrichtung des Kugelzapfens mit der Rotationsachse des Kugelzapfens zusammen. Bei nicht ausgelenktem Kugelzapfen fällt die Axialrichtung des Kugelgelenks mit der Axialrichtung des Dichtungsbalgs und des Balgschutzes zusammen.

Zweckmäßigerweise ist der Balgschutz von einem Spannmittel umgriffen, welches den Balgschutz und den Dichtungsbalg gemeinsam gegen einen umlaufenden Anlagebereich des Gehäuses drückt. Dabei wird der Bereich der Außenumfangsfläche des Balgschutzes, der den Dichtungsbalg-Anlagebereich umschließt, von dem Spannmittel umgriffen, wobei das Spannmittel vorteilhaft als ein Spannband ausgebildet ist. Der Dichtungsbalg und der Balgschutz können an deren gehäuseseitigen Enden auf diese Weise durch ein einziges Spannmittel festgelegt werden. Der umlaufende Anlagebereich des Gehäuses ist vorteilhaft als umlaufende Ringnut ausgebildet, um ein Lösen des Dichtungsbalgs von dem Gehäuse zu verhindern.

In vorteilhafter Weiterbildung ist der Balgschutz formstabil und zugleich elastisch ausgebildet. Mit einer formstabilen Ausbildung ist in diesem Zusammenhang gemeint, dass der Balgschutz als Einzelteil in sich zumindest so stabil ist, dass dieser nach einem Abstellen auf einer ebenen Fläche bedingt durch dessen Eigengewicht, im Gegensatz zu dem eingangs beschriebenen Schutzumhang, nicht in sich zusammenfällt. Unter einer elastischen Ausbildung ist im Sinne der Erfindung zu verstehen, dass der Balgschutz Rückstellungseigenschaften aufweist, die bewirken, dass der Balgschutz nach einer Verformung infolge einer Auslenkung des Kugelzapfens das Bestreben hat, in dessen Ursprungslage zurückzukehren. Durch die formstabile und zugleich elastische Ausbildung des Balgschutzes kann dieser den Dichtungsbalg in dem Umschließungsbereich umschließen, ohne dass hierzu weitere Hilfsmittel, wie zum Beispiel die eingangs erwähnten Federringe bzw. Gummiringe, erforderlich sind. Weiterhin ist aufgrund der formstabilen Ausbildung des Balgschutzes neben dem zuvor beschriebenen, gehäuseseitigen Spannmittel kein weiteres Spannmittel erforderlich, um den Balgschutz relativ zu dem Dichtungsbalg in Position zu halten. Auf einen aus dem Stand der Technik bekannten und eingangs beschriebenen zapfenseitigen Spannring kann verzichtet werden.

In vorteilhafter Weise ist der Balgschutz für sich in Axialrichtung des Kugelgelenks konturiert ausgebildet. Mit der Formulierung, dass der Balgschutz "für sich" konturiert ist, soll zum Ausdruck gebracht werden, dass der Balgschutz ohne weitere Hilfsmittel konturiert ausgebildet ist - im Gegensatz zu dem eingangs beschriebenen Schlauchumhang, welcher für sich als von einem Dichtungsbalg herunterhängender, nicht konturierter Umhang ausgebildet ist, der erst mit Hilfe von Federringen bzw. Gummiringen konturiert wird. Die Konturierung des Balgschutzes kann derart ausgebildet sein, dass diese zumindest einen nach radial außen oder nach radial innen gewölbten Teilbereich aufweist, der sich in Axialrichtung des Balgschutzes erstreckt, wobei die Axialrichtung des Balgschutzes mit der Axialrichtung des Kugelgelenks übereinstimmt.

Bevorzugt weist der Balgschutz an dessen Außenumfangsfläche zwei in Axialrichtung des Kugelgelenks verlaufende Formtrennungsgrate auf. Die konturierte Ausbildung des Balgschutzes kann derart gestaltet sein, dass der Balgschutz in dessen Axialrichtung hinterschnittige Geometriebereiche aufweist, die auch als Hinterschneidungen bezeichnet werden. Unter Hinterschneidungen sind in diesem Zusammenhang Geometriebereiche an einem durch Urformen hergestellten Bauteil zu verstehen, die ein Entformen des Bauteils nach dessen Fertigstellung aus der Urform verhindern. Der Balgschutz wird vorzugsweise durch ein Urformverfahren, insbesondere durch Spritzgießen, hergestellt. Weist der Balgschutz in Axialrichtung desselben Hinterschneidungen auf, muss in Abhängigkeit von Art und Umfang der Hinterschneidungen sowie von der Dehnbarkeit des zu entformenden Materials gegebenenfalls in Radialrichtung entformt werden, weil in dieser Richtung aufgrund der vorzugsweise rotationssymmetrischen Ausgestaltung des Balgschutzes keine Hinterschneidungen vorliegen. Vorteilhaft wird zur Herstellung des Balgschutzes eine geteilte Spritzgussform mit einem massiven und zumindest im Wesentlichen rotationssymmetrischen Kern verwendet. In diesem Fall sind die Formtrennungsgrate an der Außenumfangsfläche des Balgschutzes sowie in Radialrichtung gegenüberliegend angeordnet und erstrecken sich in einer durch die Mittelachse des Balgschutzes verlaufenden Formtrennungsebene.

Gemäß einer vorteilhaften Ausgestaltung weist eine Wandung des Dichtungsbalgs in Axialrichtung des Kugelgelenks bereichsweise einen mäanderförmigen Verlauf auf. Unter einem mäanderförmigen Verlauf ist im Rahmen der vorliegenden Erfindung ein balgartiger Verlauf zu verstehen, der von einer Abfolge von aneinander angrenzenden und zugleich entgegengesetzt gekrümmten Kehren gebildet wird. Unter einer Kehre ist in diesem Zusammenhang ein Abschnitt oder Bereich mäanderförmigen Verlaufs mit einer Richtungsänderung zu verstehen. Der Dichtungsbalg weist zumindest einen bauchigen, nach radial außen gewölbten und einen sich unmittelbar daran anschließenden taillierten, nach radial innen gewölbten Abschnitt auf - im Gegensatz zu einem Dichtungsbalg mit kugelförmiger Mantelfläche, der aufgrund seiner Form auch als Zwiebelbalg bezeichnet wird. Der mäanderförmige Verlauf bewirkt bei einer Auslenkung des Schaftes eine schonende, weil ziehharmonikaartige und daher knickfreie Verformung des Dichtungsbalgs.

Zweckmäßigerweise sind der Dichtungsbalg und der Balgschutz in dem Umschließungsbereich zumindest im Wesentlichen formkorrespondierend ausgebildet. Dabei folgt der Balgschutz dem Formverlauf des Dichtungsbalges umschließend. Dadurch, dass der Balgschutz darüber hinaus formstabil und zugleich elastisch ausgebildet ist, gestaltet sich die Montage des Balgschutzes gegenüber der eingangs beschriebenen Lösung mit dem Schutzumhang relativ einfach. Sind der Balgschutz und der Dichtungsbalg zumindest im Wesentlichen formkorrespondierend ausgebildet, kann sich der Balgschutz nach einem Überstülpen über den Dichtungsbalg allein durch Formschluss in der Montagelage halten. Darüber hinaus ist bei einer Auslenkung des Kugelzapfens eine material- und kraftschonende Verformung von Dichtungsbalg und Balgschutz gegeben, weil durch die formkorrespondierende Ausbildung auch die Verformungseigenschaften beider Bauteile in dem Umschließungsbereich zumindest im Wesentlichen deckungsgleich sind. Das bedeutet, dass sich die jeweils gegenüberliegenden oder berührenden Bereiche von Dichtungsbalg und Balgschutz bei einer Auslenkung des Kugelzapfens bei günstiger Werkstoffauswahl zumindest annähernd gleich verhalten.

Vorteilhaft weist der Dichtungsbalg einen an das Gehäuse angrenzenden und sich in Axialrichtung des Kugelgelenks in Richtung des Schaft-Anlagebereichs erstreckenden, bauchigen Abschnitt auf, welcher von dem Balgschutz umgriffen ist. Durch die Bauchigkeit, die sich nach radial außen erstreckt, wird eine Lagesicherung des Balgschutzes in Axialrichtung durch zumindest im Wesentlichen formschlüssiges Umgreifen bewirkt. Auf diese Weise können im Fahrbetrieb beispielsweise Äste den Balgschutz nicht ohne Weiteres von dem umgriffenen bauchigen Abschnitt wegschieben.

Eine Weiterbildung der Erfindung sieht vor, dass der Balgschutz innerhalb des bauchigen Abschnitts beabstandet zu dem Dichtungsbalg angeordnet ist. Die Beabstandung ist vorzugsweise umlaufend ausgebildet und innerhalb des bauchigen Abschnitts insbesondere in dem Bereich des größten Außendurchmessers des Dichtungsbalgs und somit zugleich in dem Bereich des größten Innendurchmessers des Balgschutzes angeordnet. Durch die Beabstandung und das hierdurch eingeschlossene Luftvolumen sowie die Elastizität des Balgschutzes wird eine zusätzliche Dämpfungswirkung nach Art einer Schlagdämpfung bewirkt, die einen weiteren Schutz für den Dichtungsbalg darstellt. Darüber hinaus wird durch die Beabstandung während eines Auslenkens des Kugelzapfens die Reibung zwischen der Außenoberfläche des Dichtungsbalgs und der Innenoberfläche des Balgschutzes gering gehalten.

Bevorzugt liegt der Balgschutz mit dessen dem Dichtungsbalg-Anlagebereich abgewandten axialen Endabschnitt umfänglich an dem Dichtungsbalg an. Auf diese Weise wird ein Eindringen von festen Partikeln wie z.B. kleinen Steinchen, die im Fahrbetrieb zu einer Beschädigung des Dichtungsbalgs und/oder des Balgschutzes durch Scheuern führen könnten, wirksam verhindert.

Weiterhin ist es bevorzugt, dass der axiale Endabschnitt des Balgschutzes mit dem Dichtungsbalg umlaufend stoffschlüssig verbunden, insbesondere verklebt oder verschweißt, ist. Durch das Festlegen des Endabschnitts des Balgschutzes an dem Dichtungsbalg wird sicher verhindert, dass sich der Balgschutz innerhalb des Umschließungsbereichs in Axialrichtung relativ zu dem Dichtungsbalg, beispielsweise durch Einwirkung von Ästen, verschieben kann und somit der Dichtungsbalg nicht innerhalb des vollständigen Umschließungsbereichs vor äußeren mechanischen Einwirkungen geschützt ist. Darüber hinaus wird durch diese Maßnahme sicher verhindert, dass innerhalb des Umschließungsbereichs zwischen dem Dichtungsbalg und dem Balgschutz kleine Steinchen oder sonstige unerwünschte Fremdkörper eindringen. Trotz der partiellen stoffschlüssigen Verbindung handelt es sich bei dem Dichtungsbalg und dem Balgschutz aber grundsätzlich um zwei separate Bauteile.

Vorteilhaft sind der Dichtungsbalg und der Balgschutz in Bezug auf deren stoffliche Zusammensetzung aus dem gleichen Material hergestellt. Bei einem Auslenken des Kugelzapfens werden der Dichtungsbalg und der Balgschutz bei formkorrespondierender Ausgestaltung in annähernd gleicher Weise verformt. Durch die Verwendung des gleichen Materials für die Herstellung der beiden vorgenannten Bauteile werden unerwünschte, durch inhomogene Materialeigenschaften bedingte Effekte, wie beispielsweise partiell erhöhte Reibung oder Flächenpressung und damit verbundener erhöhter Verschleiß, vermieden. Die Materialien für den Dichtungsbalg und den Balgschutz können sich in ihren technologischen Eigenschaften wie beispielsweise Zugfestigkeit, Elastizität, Dehnungsvermögen und/oder Härte unterscheiden. Beispielsweise kann der Dichtungsbalg eine Shore-Härte von 75 und der Balgschutz eine Shore-Härte von 95 aufweisen. Die Erfindung ist allerdings auch mit einem Dichtungsbalg und einem Balgschutz umsetzbar, deren stoffliche Zusammensetzung sich unterscheiden und/oder deren technologische Eigenschaften identisch sind.

Zweckmäßig ist der Balgschutz aus einem Kunststoff mit gummiähnlichen Eigenschaften hergestellt, insbesondere aus Polyurethan (PUR). Polyurethan weist gegenüber Elastomer eine höhere Zugfestigkeit auf und bietet daher als Werkstoff für den Balgschutz eine gute Widerstandsfähigkeit gegenüber äußeren mechanischen Einwirkungen. Der Balgschutz kann zur Erhöhung der Widerstandsfähigkeit zusätzlich mit einer Gewebeeinlage versehen sein, wobei im Rahmen der Bauteilauslegung darauf zu achten ist, dass ein Entformen des Balgschutzes möglich ist, wenn dieser durch Spritzgießen in einem Formwerkzeug mit massivem Kern hergestellt wird. Sind der Dichtungsbalg und der Balgschutz im Bereich des Endabschnitts des Balgschutzes miteinander verschweißt, ist es vorteilhaft, den Dichtungsbalg ebenfalls aus Polyurethan herzustellen, um die Haltbarkeit der Schweißung durch die Verwendung gleicher Werkstoffe für die Fügepartner zu erhöhen. Alternativ kann der Balgschutz auch aus einem Elastomermaterial hergestellt sein.

Im Folgenden wird die Erfindung anhand lediglich ein Ausführungsbeispiel darstellender Zeichnungsfiguren näher erläutert, wobei sich gleiche Bezugszeichen auf gleiche Bauteile oder Elemente beziehen. Dabei zeigt:
- Fig. 1: in einer Schnittdarstellung ein Kugelgelenk gemäß dem Stand der Technik;
- Fig. 2: in einer teilweise geschnittenen Darstellung ein Kugelgelenk gemäß der Erfindung;
- Fig. 3: in einer teilweise geschnittenen Darstellung einen Dichtungsbalg und einen Balgschutz aus Figur 2 und
- Fig. 4: in einer Schnittdarstellung den Balgschutz aus Figur 3.

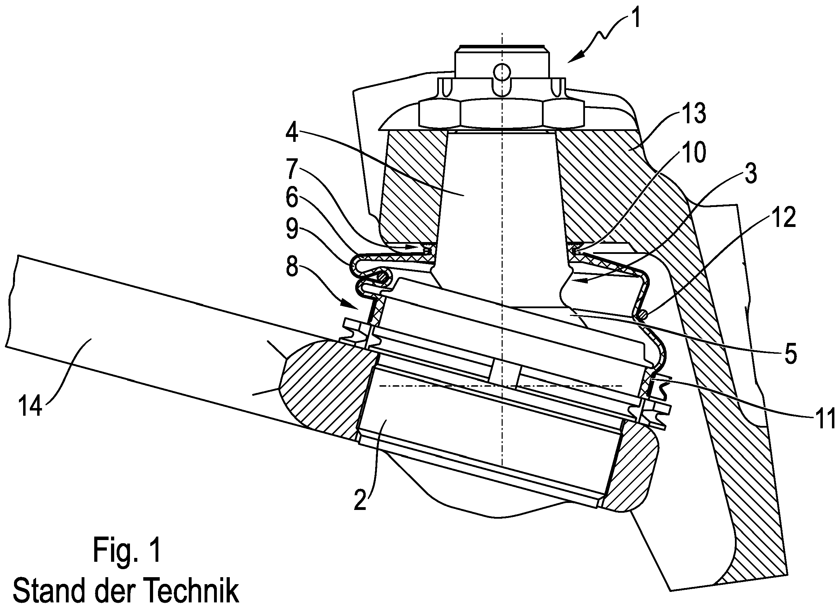

Fig. 1 zeigt ein aus dem Stand der Technik bekanntes Kugelgelenk, welches als ein sogenanntes Traggelenk 1 ausgebildet ist. Das Kugelgelenk 1 weist ein Gehäuse 2 und einen in dem Gehäuse 2 dreh- und schwenkbeweglich gelagerten Kugelzapfen 3 auf. Der Kugelzapfen 3 erstreckt sich aus einer Öffnung des Gehäuses 2 heraus und weist einen konischen Schaft 4 und eine nur teilweise sichtbare und innerhalb des Gehäuses 2 angeordnete Gelenkkugel 5 auf. Die Gehäuseöffnung ist durch einen Dichtungsbalg 6 gegen ein unerwünschtes Eindringen von Schmutz und/oder Feuchtigkeit geschützt. Der Dichtungsbalg 6 weist ein zapfenseitiges Ende 7 auf, welches an der konischen Außenumfangsfläche des Schaftes 4 anliegt, und ein gehäuseseitiges Ende 8, welches an dem Außenumfang des Gehäuses 2 festgelegt ist. Um den Dichtungsbalg 6 gegen eine Beschädigung durch äußere mechanische Einwirkung zu schützen, ist dem Dichtungsbalg 6 ein separater Schutzumhang 9 übergelegt. An dessen zapfenseitigen Ende 7 ist der Schutzumhang 9 durch einen Spannring 10 an dem Dichtungsbalg 6 festgelegt. An dessen gehäuseseitigen Ende 8 ist der Schutzumhang 9 durch ein Spannband 11 an dem Dichtungsbalg 6 festgelegt. In einem taillierten, nach innen gewölbten Abschnitt des Dichtungsbalgs 6 wird der Schutzumhang 9 durch einen Federring 12 an den Dichtungsbalg 6 gedrückt. Das Traggelenk 1 ist über den Schaft 4 an einen Radträger 13 und über das Gehäuse 2 an einen Querlenker 14 angebunden.

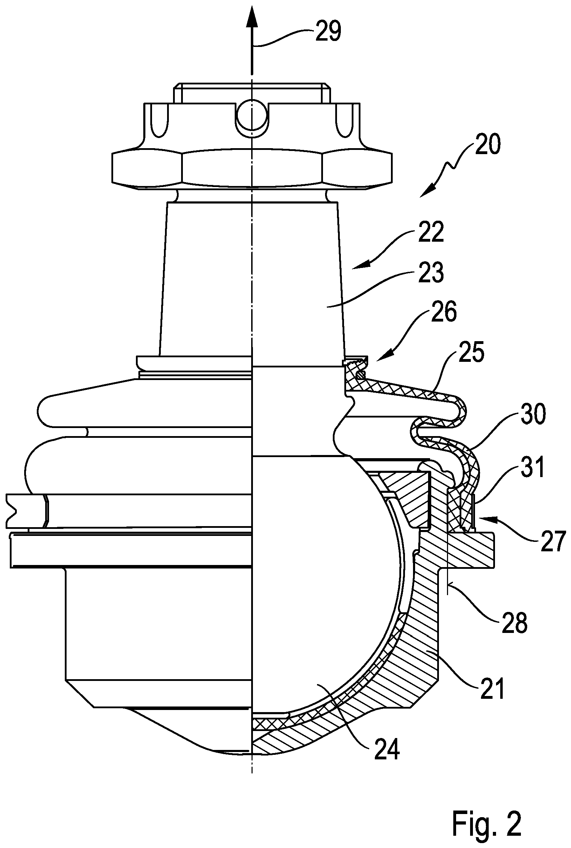

In Fig. 2 ist ein Kugelgelenk 20 dargestellt, welches ein Gehäuse 21 und einen in dem Gehäuse 21 dreh- und schwenkbeweglich gelagerten Kugelzapfen 22 aufweist. Der Kugelzapfen 22 erstreckt sich aus einer Öffnung des Gehäuses 21 heraus und weist einen konischen Schaft 23 und eine Gelenkkugel 24 auf, wobei die Gelenkkugel 24 innerhalb des Gehäuses 21 angeordnet ist. Die Gehäuseöffnung ist durch einen Dichtungsbalg 25 gegen ein unerwünschtes Eindringen von Schmutz und/oder Feuchtigkeit geschützt. Der Dichtungsbalg 25 weist ein dem Schaft 23 des Kugelzapfens 22 zugewandtes zapfenseitiges Ende 26 auf, welches an der konischen Außenumfangsfläche des Schaftes 23 anliegt, und ein gehäuseseitiges Ende 27, welches an einem umlaufenden Anlagebereich 28 des Gehäuses 21 festgelegt ist. Die Rotationsachse des Kugelzapfens 22, der in nicht ausgelenkter Position dargestellt ist, fällt mit der Axialrichtung 29 des Kugelgelenks 20 zusammen. Der Dichtungsbalg 25 ist zur Vermeidung von Beschädigungen desselben durch mechanische Einwirkung bereichsweise von einem Balgschutz 30 umschlossen. Der Dichtungsbalg 25 ist an dessen gehäuseseitigem Ende 27 in Axialrichtung 29 bündig mit dem Balgschutz ausgerichtet. In diesem Bereich werden der Dichtungsbalg 25 und der Balgschutz 30 von einem als Spannband 31 ausgebildeten Spannmittel umschlossen und gemeinsam gegen den umlaufenden Anlagebereich 28 des Gehäuses 21 gedrückt.

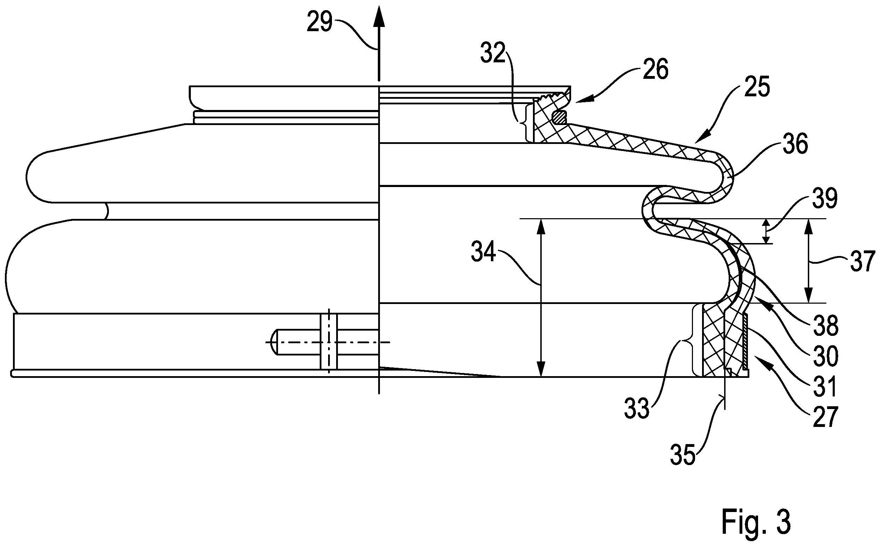

Fig. 3 zeigt den Dichtungsbalg 25 für das Kugelgelenk 20, wobei der Dichtungsbalg 25 zur Vermeidung von Beschädigungen desselben durch mechanische Einwirkung bereichsweise von dem Balgschutz 30 umschlossen ist. Eine solche Baugruppe kann beispielsweise Gegenstand eines Ersatzteilpakets sein. Der Dichtungsbalg 25 weist an dessen zapfenseitigem Ende 26 einen Schaft-Anlagebereich 32 auf, welcher Teil der Innenumfangsfläche des Dichtungsbalgs 25 ist und dichtend an dem Schaft 23 anliegt. An dessen gehäuseseitigem Ende 27 liegt die Innenumfangsfläche des Dichtungsbalgs 25 mit einem Gehäuse-Anlagebereich 33 dichtend an dem umlaufenden Anlagebereich 28 des Gehäuses 21 an. Der Balgschutz 30 umschließt den Dichtungsbalg 25 in einem Umschließungsbereich 34, der sich, ausgehend von dem Gehäuse-Anlagebereich 33, in Axialrichtung 29 des Kugelgelenks 20 in Richtung des Schaft-Anlagebereichs 32 erstreckt. Der Bereich der Außenumfangsfläche des Dichtungsbalgs 25, der den Gehäuse-Anlagebereich 33 umschließt, bildet eine umlaufende Anlagefläche für den Balgschutz 30. Der Balgschutz 30 liegt an dieser umlaufenden Anlagefläche mit einem Dichtungsbalg-Anlagebereich 35 an, wobei der Dichtungsbalg-Anlagebereich 35 Teil der Innenumfangsfläche 42 des Balgschutzes 30 ist. Der Dichtungsbalg 25 und der Balgschutz 30 sind in dem Umschließungsbereich 34 im Wesentlichen formkorrespondierend ausgebildet.

Eine Wandung 36 des Dichtungsbalgs 25 ist in Axialrichtung 29 des Kugelgelenks 20 bereichsweise mäanderförmig verlaufend augestaltet. Der Dichtungsbalg 25 weist einen an das Gehäuse 21 angrenzenden und sich in Axialrichtung 29 des Kugelgelenks 20 in Richtung des Schaft-Anlagebereichs 32 erstreckenden, bauchigen Abschnitt 37 auf, welcher von dem Balgschutz 30 umgriffen ist. Der Balgschutz 30 ist innerhalb des bauchigen Abschnitts 37 beabstandet zu dem Dichtungsbalg 25 angeordnet, wobei der Abstand 38 innerhalb des bauchigen Abschnitts 37 im Bereich des größten Durchmessers des Dichtungsbalgs 25 ein Maximum aufweist. Der Balgschutz 30 liegt mit dessen dem Dichtungsbalg-Anlagebereich 35 abgewandten axialen Endabschnitt 39 umfänglich an dem Dichtungsbalg 25 an. Das Spannband 31 umgreift den gehäuseseitigen Endabschnitt des Balgschutzes 30 und drückt diesen mit dem Dichtungsbalg-Anlagebereich 35 gegen den gehäuseseitigen Endabschnitt des Dichtungsbalgs 25. Die von dem Spannband 31 ausgeübte Spannkraft wird von dem gehäuseseitigen Endabschnitt des Dichtungsbalgs 25 über den Gehäuse-Anlagebereich 33 auf den umlaufenden Anlagebereich 28 des Gehäuses 21 übertragen.

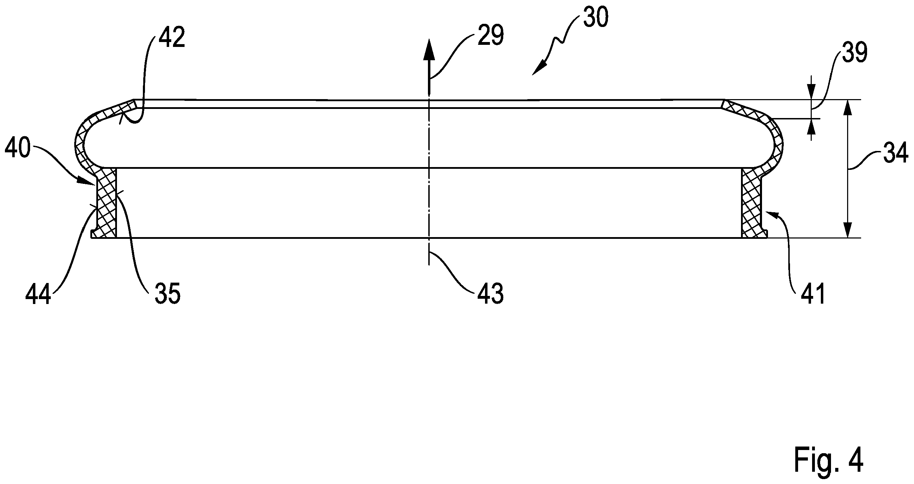

Fig. 4 zeigt den Balgschutz 30 zum bereichsweisen Umschließen des Dichtungsbalgs 25 als Einzelteil, wobei der Balgschutz 30 für sich in Axialrichtung 29 des Kugelgelenks 20 konturiert ausgestaltet ist. Der Balgschutz 30 ist formstabil und zugleich elastisch ausgebildet und in Bezug auf dessen sich in Axialrichtung 29 des Kugelgelenks 20 erstreckende Mittelachse 43 rotationssymmetrisch ausgebildet. Darüber hinaus ist der im Spritzgussverfahren aus Polyurethan hergestellte Balgschutz 30 in Axialrichtung 29 des Kugelgelenks 20 hinterschnittig ausgebildet und weist an dessen Außenumfangsfläche 44 zwei in Axialrichtung 29 verlaufende Formtrennungsgrate 40, 41 auf. Die Formtrennungsgrate 40, 41 sind an der Außenumfangsfläche 44 des Balgschutzes 30 in Radialrichtung gegenüberliegend angeordnet und erstrecken sich in einer durch die Mittelachse 43 des Balgschutzes 30 verlaufenden Formtrennungsebene, die deckungsgleich mit der Zeichenebene ist. Der Umschließungsbereich 34 erstreckt sich in Axialrichtung 29 des Kugelgelenks 20 über die gesamte Höhe des Balgschutzes 30. Die Innenumfangsfläche 42 des Balgschutzes 30 liegt mit dem zapfenseitigen Endabschnitt 39 an dem Dichtungsbalg 25 an. Der gehäuseseitige Endabschnitt der Innenumfangsfläche 42 wird durch den Dichtungsbalg-Anlagebereich 35 gebildet.

### Bezugszeichen

- 1: Kugelgelenk, Traggelenk
- 2: Gehäuse
- 3: Kugelzapfen
- 4: Schaft
- 5: Gelenkkugel
- 6: Dichtungsbalg
- 7: zapfenseitiges Ende
- 8: gehäuseseitiges Ende
- 9: Schutzumhang
- 10: Spannring
- 11: Spannband
- 12: Federring
- 13: Radträger
- 14: Querlenker

- 20: Kugelgelenk
- 21: Gehäuse
- 22: Kugelzapfen
- 23: Schaft
- 24: Gelenkkugel
- 25: Dichtungsbalg
- 26: zapfenseitiges Ende
- 27: gehäuseseitiges Ende
- 28: umlaufender Anlagebereich des Gehäuses
- 29: Axialrichtung des Kugelgelenks
- 30: Balgschutz
- 31: Spannmittel, Spannband
- 32: Schaft-Anlagebereich
- 33: Gehäuse-Anlagebereich
- 34: Umschließungsbereich
- 35: Dichtungsbalg-Anlagebereich
- 36: Wandung des Dichtungsbalgs
- 37: bauchiger Abschnitt
- 38: Abstand
- 39: Endabschnitt
- 40: Formtrennungsgrat
- 41: Formtrennungsgrat
- 42: Innenumfangsfläche
- 43: Mittelachse des Balgschutzes
- 44: Außenumfangsfläche

## Patentansprüche

1. Kugelgelenk (20) für ein Fahrzeug, insbesondere für ein Offroadfahrzeug, das Kugelgelenk (20) aufweisend ein Gehäuse (21) und einen in dem Gehäuse (21) dreh- und schwenkbeweglich gelagerten Kugelzapfen (22), welcher sich mit einem Schaft (23) aus einer Öffnung des Gehäuses (21) heraus erstreckt, wobei die Gehäuseöffnung durch einen Dichtungsbalg (25) gegen ein unerwünschtes Eindringen von Schmutz und/oder Feuchtigkeit geschützt ist, **dadurch gekennzeichnet, dass** der Dichtungsbalg (25) zur Vermeidung von Beschädigungen desselben durch mechanische Einwirkung bereichsweise von einem Balgschutz (30) umschlossen ist, derart, dass der Balgschutz (30) mit dessen Innenumfangsfläche zumindest im Wesentlichen an einer Außenumfangsfläche des Dichtungsbalgs (25) anliegt, wobei die Innenumfangsfläche des Balgschutzes (30) kleiner ist als die Außenumfangsfläche des Dichtungsbalgs (25).

2. Kugelgelenk (20) nach Anspruch 1, **dadurch gekennzeichnet, dass** der Dichtungsbalg (25) einenends mit einem Schaft-Anlagebereich (32) dichtend an dem Schaft (23) und andernends mit einem Gehäuse-Anlagebereich (33) dichtend an dem Gehäuse (21) anliegt und der Balgschutz (30) den Dichtungsbalg (25) in einem Umschließungsbereich (34) umschließt, der sich, ausgehend von dem Gehäuse-Anlagebereich (33), in Axialrichtung (29) des Kugelgelenks (20) in Richtung des Schaft-Anlagebereichs (32) erstreckt.

3. Kugelgelenk (20) nach Anspruch 1 oder 2, **dadurch gekennzeichnet, dass** der Balgschutz (30) von einem Spannmittel (31) umgriffen ist, welches den Balgschutz (30) und den Dichtungsbalg (25) gemeinsam gegen einen umlaufenden Anlagebereich (28) des Gehäuses (21) drückt.

4. Kugelgelenk (20) nach einem der vorhergehenden Ansprüche, **dadurch gekennzeichnet, dass** der Balgschutz (30) formstabil und zugleich elastisch ausgebildet ist.

5. Kugelgelenk (20) nach einem der vorhergehenden Ansprüche, **dadurch gekennzeichnet, dass** der Balgschutz (30) für sich in Axialrichtung (29) des Kugelgelenks (20) konturiert ausgebildet ist.

6. Kugelgelenk (20) nach einem der vorhergehenden Ansprüche, **dadurch gekennzeichnet, dass** der Balgschutz (30) an dessen Außenumfangsfläche (44) zwei in Axialrichtung (29) des Kugelgelenks (20) verlaufende Formtrennungsgrate (40, 41) aufweist.

7. Kugelgelenk (20) nach einem der vorhergehenden Ansprüche, **dadurch gekennzeichnet, dass** eine Wandung (36) des Dichtungsbalgs (25) in Axialrichtung (29) des Kugelgelenks (20) bereichsweise einen mäanderförmigen Verlauf aufweist.

8. Kugelgelenk (20) nach einem der Ansprüche 2 bis 7, **dadurch gekennzeichnet, dass** der Dichtungsbalg (25) und der Balgschutz (30) in dem Umschließungsbereich (34) zumindest im Wesentlichen formkorrespondierend ausgebildet sind.

9. Kugelgelenk (20) nach einem der Ansprüche 2 bis 8, **dadurch gekennzeichnet, dass** der Dichtungsbalg (25) einen an das Gehäuse (21) angrenzenden und sich in Axialrichtung (29) des Kugelgelenks (20) in Richtung des Schaft-Anlagebereichs (32) erstreckenden, bauchigen Abschnitt (37) aufweist, welcher von dem Balgschutz (30) umgriffen ist.

10. Kugelgelenk (20) nach Anspruch 9, **dadurch gekennzeichnet, dass** der Balgschutz (30) innerhalb des bauchigen Abschnitts (37) beabstandet zu dem Dichtungsbalg (25) angeordnet ist.

11. Kugelgelenk (20) nach einem der Ansprüche 2 bis 10, **dadurch gekennzeichnet, dass** der Balgschutz (30) mit dessen dem Dichtungsbalg-Anlagebereich (35) abgewandten axialen Endabschnitt (39) umfänglich an dem Dichtungsbalg (25) anliegt.

12. Kugelgelenk (20) nach Anspruch 11, **dadurch gekennzeichnet, dass** der axiale Endabschnitt (39) des Balgschutzes (30) mit dem Dichtungsbalg (25) umlaufend stoffschlüssig verbunden, insbesondere verklebt oder verschweißt, ist.

13. Kugelgelenk (20) nach einem der vorhergehenden Ansprüche, **dadurch gekennzeichnet, dass** der Dichtungsbalg (25) und der Balgschutz (30) in Bezug auf deren stoffliche Zusammensetzung aus dem gleichen Material hergestellt sind.

14. Kugelgelenk (20) nach einem der vorhergehenden Ansprüche, **dadurch gekennzeichnet, dass** der Balgschutz (30) aus einem Kunststoff mit gummiähnlichen Eigenschaften hergestellt ist, insbesondere aus Polyurethan (PUR).

## Claims

1. Ball joint (20) for a vehicle, in particular for an off-road vehicle, the ball joint (20) having a housing (21) and a ball pivot (22) which is mounted in the housing (21) in a rotationally and pivotably movable manner and extends with a shank (23) out of an opening of the housing (21), the housing opening being protected by way of a sealing boot (25) against an undesired penetration of dirt and/or moisture, **characterized in that** the sealing boot (25) is enclosed in regions by a boot protector (30) in order to avoid damage of the said sealing boot (25) as a result of mechanical action, in such a way that the boot protector (30) bears with its inner circumferential face at least substantially against an outer circumferential face of the sealing boot (25), the inner circumferential face of the boot protector (30) being smaller than the outer circumferential face of the sealing boot (25).

2. Ball joint (20) according to Claim 1, **characterized in that** the sealing boot (25) bears at one end with a shank bearing region (32) sealingly against the shank (23) and at the other end with a housing bearing region (33) sealingly against the housing (21), and the boot protector (30) encloses the sealing boot (25) in an enclosure region (34) which, starting from the housing bearing region (33), extends in the axial direction (29) of the ball joint (20) in the direction of the shank bearing region (32).

3. Ball joint (20) according to Claim 1 or 2, **characterized in that** the boot protector (30) is engaged around by a clamping means (31) which presses the boot protector (30) and the sealing boot (25) jointly against a circumferential bearing region (28) of the housing (21) .

4. Ball joint (20) according to one of the preceding claims, **characterized in that** the boot protector (30) is of dimensionally stable and at the same time elastic configuration.

5. Ball joint (20) according to one of the preceding claims, **characterized in that** the boot protector (30) is for its own part of contoured configuration in the axial direction (29) of the ball joint (20).

6. Ball joint (20) according to one of the preceding claims, **characterized in that**, on its outer circumferential face (44), the boot protector (30) has two mould release burrs (40, 41) which run in the axial direction (29) of the ball joint (20).

7. Ball joint (20) according to one of the preceding claims, **characterized in that** a wall (36) of the sealing boot (25) has a serpentine-shaped course in regions in the axial direction (29) of the ball joint (20).

8. Ball joint (20) according to one of Claims 2 to 7, **characterized in that** the sealing boot (25) and the boot protector (30) are of at least substantially dimensionally corresponding configuration in the enclosure region (34).

9. Ball joint (20) according to one of Claims 2 to 8, **characterized in that** the sealing boot (25) has a bulbous section (37) which adjoins the housing (21), and extends in the axial direction (29) of the ball joint (20) in the direction of the shank bearing region (32), and is engaged around by the boot protector (30).

10. Ball joint (20) according to Claim 9, **characterized in that** the boot protector (30) is arranged within the bulbous section (37) in a manner which is spaced apart from the sealing boot (25).

11. Ball joint (20) according to one of Claims 2 to 10, **characterized in that**, with its axial end section (39) which faces away from the sealing boot bearing region (35), the boot protector (30) bears circumferentially against the sealing boot (25).

12. Ball joint (20) according to Claim 11, **characterized in that** the axial end section (39) of the boot protector (30) is connected to the sealing boot (25) in a circumferentially integrally joined manner, in particular is adhesively bonded or welded to it.

13. Ball joint (20) according to one of the preceding claims, **characterized in that** the sealing boot (25) and the boot protector (30) are manufactured from the same material in relation to their material composition.

14. Ball joint (20) according to one of the preceding claims, **characterized in that** the boot protector (30) is manufactured from a plastic with rubber-like properties, in particular from polyurethane (PUR).

## Revendications

1. Articulation sphérique (20) destinée à un véhicule, en particulier un véhicule tout-terrain, l'articulation sphérique (20) comprenant un logement (21) et un pivot sphérique (22) qui est logé à rotation et à pivotement dans le logement (21) et qui sort par une tige (23) d'une ouverture du logement (21), l'ouverture de logement étant protégée par un soufflet d'étanchéité (25) contre toute pénétration indésirable de saleté et/ou d'humidité, **caractérisée en ce que** le soufflet d'étanchéité (25) est enfermé par endroits par une protection de soufflet (30) destinée à empêcher son endommagement par une action mécanique de sorte que la protection de soufflet (30) vienne en appui avec sa surface périphérique intérieure au moins sensiblement sur une surface périphérique extérieure du soufflet d'étanchéité (25), la surface périphérique intérieure de la protection de soufflet (30) est plus petite que la surface périphérique extérieure du soufflet d'étanchéité (25).

2. Articulation sphérique (20) selon la revendication 1, **caractérisée en ce que** le soufflet d'étanchéité (25) vient en appui à une extrémité de manière étanche sur la tige (23) par une zone d'appui côté tige (32) et à l'autre extrémité de manière étanche sur le logement (21) par une zone d'appui côté logement (33) et la protection de soufflet (30) enferme le soufflet d'étanchéité (25) dans une zone d'enfermement (34) qui s'étend de la zone d'appui côté logement (33) dans la direction axiale (29) de l'articulation sphérique (20) en direction la zone d'appui côté tige (32).

3. Articulation sphérique (20) selon la revendication 1 ou 2, **caractérisée en ce que** la protection de soufflet (30) est entourée par un moyen de serrage (31) qui presse la protection de soufflet (30) et le soufflet d'étanchéité (25) ensemble contre une zone d'appui périphérique (28) du logement (21).

4. Articulation sphérique (20) selon l'une des revendications précédentes, **caractérisée en ce que** la protection de soufflet (30) est conçue pour être à la fois de forme stable et élastique.

5. Articulation sphérique (20) selon l'une des revendications précédentes, **caractérisée en ce que** la protection de soufflet (30) est conçue pour être profilée dans la direction axiale (29) de l'articulation sphérique (20).

6. Articulation sphérique (20) selon l'une des revendications précédentes, **caractérisée en ce que** la protection de soufflet (30) comporte sur sa surface périphérique extérieure (44) deux nervures de séparation moulée (40, 41) s'étendant dans la direction axiale (29) de l'articulation sphérique (20).

7. Articulation sphérique (20) selon l'une des revendications précédentes, **caractérisée en ce que** la paroi (36) du soufflet d'étanchéité (25) présente une allure sinueuse dans la direction axiale (29) de l'articulation sphérique (20).

8. Articulation sphérique (20) selon l'une des revendications 2 à 7, **caractérisée en ce que** le soufflet d'étanchéité (25) et la protection de soufflet (30) sont conçus de manière à se correspondre au moins sensiblement en termes de forme dans la zone d'enfermement (34).

9. Articulation sphérique (20) selon l'une des revendications 2 à 8, **caractérisée en ce que** le soufflet d'étanchéité (25) comporte une partie renflée (37) qui est adjacente au logement (21), qui s'étend dans la direction axiale (29) de l'articulation sphérique (20) en direction de la zone d'appui côté tige (32) et qui est entourée par la protection de soufflet (30).

10. Articulation sphérique (20) selon la revendication 9, **caractérisée en ce que** la protection de soufflet (30) est disposée dans la partie renflée (37) à distance du soufflet d'étanchéité (25).

11. Articulation sphérique (20) selon l'une des revendications 2 à 10, **caractérisée en ce que** la protection de soufflet (30) vient en appui par sa partie d'extrémité axiale (39), opposée à la zone d'appui côté soufflet d'étanchéité (35), de manière périphérique sur le soufflet d'étanchéité (25).

12. Articulation sphérique (20) selon la revendication 11, **caractérisée en ce que** la partie d'extrémité axiale (39) de la protection de soufflet (30) est reliée de manière périphérique par engagement de matière, en particulier collée ou soudée, au soufflet d'étanchéité (25) .

13. Articulation sphérique (20) selon l'une des revendications précédentes, **caractérisée en ce que** le soufflet d'étanchéité (25) et la protection de soufflet (30) sont fabriquées quant à leur composition de matière, à partir de la même matière.

14. Articulation sphérique (20) selon l'une des revendications précédentes, **caractérisée en ce que** la protection de soufflet (30) est fabriquée à partir d'une matière synthétique ayant des propriétés analogues à celle du caoutchouc, en particulier à partir de polyuréthane (PUR).
